# EUROPEAN PATENT APPLICATION

(11) **EP 3 722 001 A1**
(43) Date of publication of application: **14.10.2020**
(21) Application number: 20177740.6
(22) Date of filing: 21.11.2014
(51) Int. Cl.: B01L 3/00, G01N 1/34

(54) **MICROFLUIDIC METHODS AND SYSTEMS FOR ISOLATING PARTICLE CLUSTERS**

(30) Priority: 22.11.2013 US 201361907912 P
(62) Divisional of application: 14864514.6
(71) Applicant: The General Hospital Corporation, Boston, MA 02114 (US)
(72) Inventor: SARIOGLU, Ali Fatih, Atlanta, Georgia 25517 (US); TONER, Mehmet, Charlestown, Massachusetts 02129 (US)
(74) Representative: Fish & Richardson P.C.

(57) **Abstract**

The invention relates to microfluidic methods and devices that include a substrate defining an inlet and an outlet, a set of structures arranged on the substrate between the inlet and the outlet to form multiple particle cluster capture zones, in which each particle cluster capture zone includes a subset of the structures that define an input flow path that is divided equally into two output flow paths by a dividing barrier of one of the structures in the particle cluster capture zone, and multiple microfluidic channels defined on the substrate to direct fluid from the inlet to the input flow paths of the particle cluster capture zones and from the output flow paths of the particle cluster capture zones to the outlet.

## Description

### TECHNICAL FIELD

The present disclosure relates to microfluidic methods and systems for isolating particle clusters.

### BACKGROUND

The presence of circulating tumor cell clusters and tumor-lymphocyte mixed clusters is understood to be a potentially important factor in the prognosis of a metastatic process in patients. Isolation and retrieval of such cell clusters therefore may allow one to perform studies of disease progression and treatment response of cancers. Microfluidic technologies have emerged as indispensable tools for isolating and retrieving rare cells from whole blood for diagnosis and biomedical research. However, retrieval of trapped cell clusters on microfluidic chips can be a challenging task since methods for fixing the cell clusters in place may rely on the use of antigen-antibody reactions, which can alter the cell behavior. In addition, the cells may actively form specific/nonspecific bonds with varying strengths depending on the material constituting the microfluidic chip, the sample flow speed, and any surface coatings on the chip. In certain cases, these bonds are so strong that they cannot be broken with increased flow speed before causing lysis of the attached cells, thus necessitating the application of special surface coatings and chemicals to the chip that inevitably disturb the cell's natural state.

### SUMMARY

The present disclosure relates to devices and methods for isolating clusters of particles, e.g., cells, from a fluid sample. In general, in a first aspect, the subject matter of the present disclosure can be embodied in microfluidic devices that include a substrate defining an inlet and an outlet; a set of structures arranged on the substrate between the inlet and the outlet to form multiple particle cluster capture zones, in which each particle cluster capture zone includes a subset of the structures that defines an input flow path that is divided, e.g., equally, into two output flow paths by a dividing barrier of one of the structures in the subset of the structures; and multiple microfluidic channels defined on the substrate to direct fluid from the inlet to the input flow paths of the particle cluster capture zones and from the output flow paths of the particle cluster capture zones to the outlet.

In general, in another aspect, the subject matter of this disclosure can be embodied in techniques for minimizing non-specific binding of particles, such as cell clusters and cells, to walls of a microfluidic device by cooling the microfluidic device to relatively low temperatures, such as between 0 and 15 degrees Celsius, during operation of the device.

The microfluidic devices can include one or more of the following features. For example, in some implementations, the subset of structures is further arranged such that each output flow path has a cross-section large enough to allow passage of a single particle of a first type and prohibit passage of a cluster of two or more of the particles of the first type. In some implementations, the structures are arranged in two or more rows, in which the structures in each row are laterally offset from the structures in an adjacent row to form the multiple particle cluster capture zones. A subset of structures can include three triangular prism structures arranged in two rows, in which first and second triangular prism structures are arranged in a first row with one corner of the first triangular prism structure being arranged adjacent to one corner of the second triangular prism structure to define the input flow path between them, and a third triangular prism structure is arranged in a second row offset from the first and second triangular prism structures in the first row, such that a sharp edge of the third triangular prism structure is arranged between adjacent corners of the first and second triangular prism structures located in the first row, and in which the dividing barrier is the sharp edge of the third triangular prism structure. The particles may be cells, the sharp edge of the third triangular prism structure can be approximately centered between the adjacent corners of the first and second triangular prism structures, and a distance between each of the adjacent corners of the first and second triangular prism structures and the sharp edge of the third triangular prism structure can be at least 10 microns.

In some implementations, the dividing barrier has a corner radius less than about 10 microns. In some implementations, the walls of the structure that meet to form the dividing barrier are at an angle less than or equal to 90 degrees.

In some implementations, all of the structures have a cross-sectional shape that is the same. In some implementations, the structures in the set of structures include two or more different cross-sectional shapes. In some implementations, one or more of the structures have a cross-sectional shape selected from the group consisting of a triangle, a diamond, a square, a rectangle, an ellipse, or a circle. In some implementations, one or more of the structures have a shape selected from the group consisting of a triangular prism, a cube, a rectangular prism, a rombohedron, a circular cylinder, or an elliptic cylinder.

In some implementations, each structure has a height of at least 10 microns, e.g., 20, 30, 40, 50, 60, 70, 80, 90, or 100 microns, or even more, e.g., 200, or 300 microns.

In some implementations, the device includes a cooling device coupled to the substrate, in which the cooling device is configured to cool the microfluidic device to a temperature between about 0 and 15 degrees Celsius.

In some implementations, the particles in the particle clusters include cells, e.g., white blood cells, red blood cells, tumor cells, e.g., circulating tumor cells (CTCs), fetal cells, epithelial cells, or beads, e.g., magnetic or polymeric beads, e.g., beads bound to cells.

In another aspect, the subject matter of the present disclosure can be embodied in methods of isolating particle clusters from a fluid sample using a microfluidic device, in which the methods include flowing, along a first direction, the fluid sample through multiple particle cluster capture zones in the microfluidic device, in which each particle cluster capture zone includes multiple structures arranged to define an input flow path that is divided equally into two output flow paths by a dividing barrier of one of the structures in the particle cluster capture zone, allowing a particle cluster from the fluid sample to be trapped at the dividing barrier in one of the particle cluster capture zones, and flowing, along a second direction that is opposite to the first direction, a second fluid through the plurality of particle cluster capture zones to release the trapped particle cluster.

The methods can include one or more of the following features. For example, in some implementations, the particle clusters include cell clusters. The cell clusters may be circulating tumor cell (CTC) clusters.

In some implementations, the fluid sample further includes individual particles, and the individual particles pass through the multiple particle cluster capture zones during flowing of the fluid sample without being trapped by the dividing barriers of the particle capture zones. The individual particles may include red blood cells and/or white blood cells.

In some implementations, for each particle cluster capture zone, the two outgoing fluid streams are separated by an angle of less than or equal to 90 degrees.

In some implementations, the method further includes cooling the microfluidic device to a temperature between a freezing temperature of the fluid sample and about 15 degrees Celsius.

In some implementations, the overall flow rate of the fluid sample through the multiple particle cluster capture zones is less than about 250 ml/hr, e.g., 200, 150, 100, 100, 50, or 25 ml/hr.

In some implementations, for each particle cluster capture zone, the flow rate of the fluid sample through the particle cluster capture zone is less than about 10 microliter/hr, e.g., 9, 8, 7, 6, 5, 4, 3, 2, or 1 microliter/hr.

In some implementations, for each particle cluster capture zone, the shear flow of the fluid sample through each of the outgoing fluid streams is less than about 10, 20, 30, 40, or 50 s⁻¹.

In some implementations, the particle cluster includes a cluster of two or more particles of a first type, and the subset of structures is further arranged such that each output flow path has a cross-section large enough to allow passage of a single particle of a first type and prohibit passage of the particle cluster.

For the purposes of this disclosure, a particle cluster is understood to mean a group of two or more particles held together, e.g., by chemical bonds (e.g., ionic bonds, covalent bonds, Van der Waals forces, among others), magnetic forces, and/or electrostatic forces.

For the purposes of this disclosure, an individual particle is understood to mean a particle that is not held together with other particles.

For the purposes of this disclosure, a dividing barrier is understood to mean a structure or portion, e.g., an edge, of a structure that is part of a particle cluster capture zone and is dimensioned and located to retain particle clusters. The dividing barrier is located in the particle cluster capture zone between two outlet flow paths.

Implementations of the subject matter described herein can include several advantages. For example, the devices described herein can be used to trap and isolate cell clusters without the need for antibody-antigen reactions. Accordingly, cell clusters may be studied without concern that such antibody-antigen reactions will alter the cell behavior. In addition, once trapped, the isolated cell clusters can be easily removed without the need to use high shear forces or other techniques that may disturb or damage the cell's natural state. Moreover, by reducing the temperature of the device, and thus the temperature of the fluid sample and particles within the fluid sample, relative to the ambient, the occurrence of non-specific binding can be reduced, which may lead to an increase in purity of isolated cells or cell clusters.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. All publications, patent applications, patents, and other references mentioned herein are incorporated by reference in their entirety. In case of conflict, the present specification, including definitions, will control. In addition, the materials, methods, and examples are illustrative only and not intended to be limiting.

Other features and advantages of the invention will be apparent from the following detailed description, and from the claims.

### BRIEF DESCRIPTION OF THE DRAWINGS

FIG 1A is a schematic illustrating an example of a microfluidic device for isolating particle clusters.
FIGS. 1B-1D are schematics illustrating three different phases of using a microfluidic device to isolate particle clusters.
FIG. 2 is a schematic illustrating a top view of a particle cluster capture zone of a microfluidic device.
FIG. 3 is a schematic illustrating forces acting on a particle cluster in a particle cluster capture zone and fluid speed in the particle cluster capture zone.
FIGS. 4A-4C are schematics that illustrate several examples of particle cluster capture zones in which the structures have different profiles.
FIG. 5 is a scanning electron microscope photograph of a microfluidic device that includes triangular structures arranged in multiple particle cluster capture zones.
FIG. 6 is a photograph of a microfluidic chip that is fabricated to include multiple microfluidic channels that lead to different regions on the chip having particle cluster capture zones.
FIG 7 is a schematic that illustrates the concept of using a microfluidic device containing particle cluster capture zones with cooling to improve cluster retrieval and purity.
FIG. 8 is a plot that shows the rate of capture of clusters from a blood sample at different overall flow rates of the blood sample through a microfluidic device containing particle cluster capture zones.
FIG. 9 is a plot illustrating a percentage of patients found to have cancerous cell clusters in their blood using a microfluidic device containing particle cluster capture zones.
FIG. 10 is a plot showing the release rate of cell clusters from particle cluster capture zones of a microfluidic device.
FIG. 11 is a schematic showing particle cluster capture zones of a device after passing a buffer solution through the device at room temperature and at 4 degrees Celsius.
FIG 12 is a plot that shows cell viability for cells processed with the microfluidic device having the particle cluster capture zones ("After release") and for cells that are not processed in the microfluidic device ("Before spike").

### DETAILED DESCRIPTION

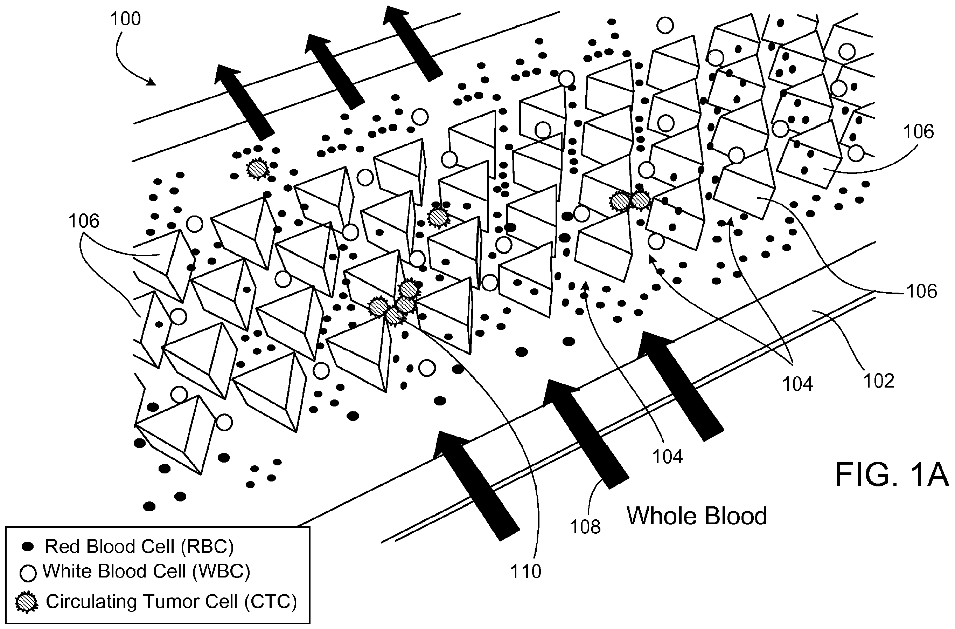

FIG. 1A is a schematic that illustrates an example of a microfluidic device 100 capable of isolating particle clusters from a fluid sample. The device 100 includes a substrate 102 on which are arranged multiple pillar-like structures 106. In particular, the pillar-like structures 106 are arranged to form multiple cluster capture zones 104 on an uppermost surface of the substrate 102. During operation of the device 100, a user introduces a fluid sample 108 (e.g., blood) containing one or more particle clusters 110 (e.g., circulating tumor cell clusters) into the device 100 such that the fluid sample flows through the particle cluster capture zones 104. Each cluster capture zone 104 within the capture area 102 includes a funnel portion that directs an incoming fluid stream of the fluid sample into two separate openings to form two outgoing fluid streams. The openings in each particle cluster capture zone 104 are arranged about a dividing barrier of one of the pillar-like structures 106 within the zone 104. As a particle cluster 110 in the fluid sample flows into a funnel portion of one of the particle cluster capture zones 104, the particle cluster may become trapped at the sharp-edge. The particle cluster is held in place on the dividing barrier due to a balance of forces including frictional forces and shear flow forces. However, gaps may remain in the openings of the particle cluster capture zones 104 that allow individual particles (i.e., particles that are not held together in a cluster such as white blood cells and/or red blood cells) to continue to pass through without being trapped. Thus, the multiple particle cluster capture zones 104 serve as a filter that isolate particle clusters from individual particles in a fluid sample. In some implementations, the structures that form the flow paths on either side of the dividing barrier may be arranged such that each of those flow paths has a cross-section large enough to allow passage of a single particle of a first type and prohibit passage of a cluster of the particles of the first type. After the fluid sample 108 passes through the particle cluster capture zones 104 and one or more particle clusters 110 are trapped, the flow of fluid through the device 100 can be reversed (using the same initial fluid sample or a different fluid) to release particle clusters trapped in the particle cluster capture zones 104.

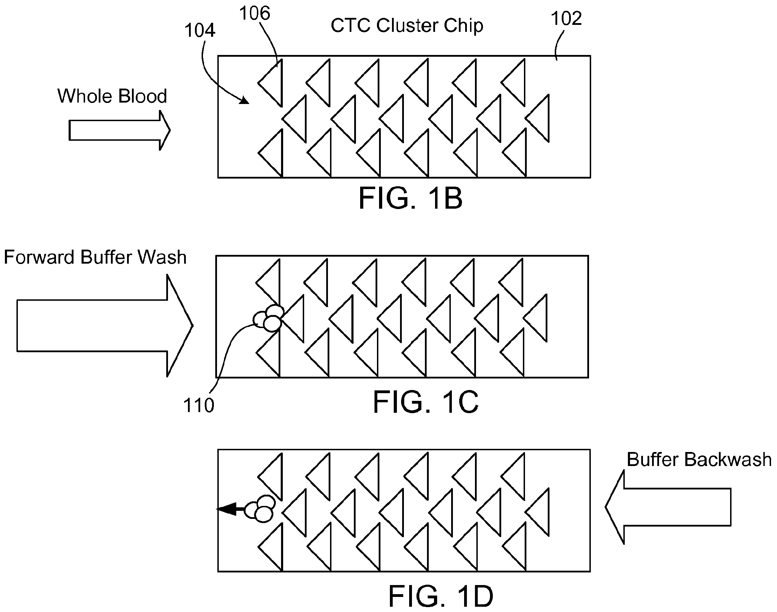

FIGS. 1B-1D are a series of three schematics illustrating a top view of the microfluidic device of FIG. 1A at different stages of process for isolating particle clusters. In the first "cluster trapping" stage (FIG. 1B), the fluid sample (e.g., blood) containing the particle clusters 110 is introduced along a first direction to the structures 106 that are arranged in multiple particle cluster capture zones 104. One or more particle clusters 110 are then trapped in the cluster particle capture zones. After flowing the fluid sample through the structures, the device 100 is washed with a second solution (e.g., a buffer solution) along the same direction as the fluid sample during a "washing" stage to clean out the fluid sample from the device 100 (see FIG. 1C). Subsequently, a third solution (e.g., another buffer solution) is passed through the structures 106 in the reverse direction to release the trapped particle cluster 110 during a "release" stage (see FIG. ID). The released particle clusters then can be collected for further study. In some implementations, the third stage that includes passing a solution in the reverse direction to release the trapped particle clusters is avoided, and the trapped particle clusters are studied in the capture device itself. Alternatively, the purpose of isolating and trapping the particle clusters is to remove the particle clusters from the fluid sample in order to instead study the individual particles.

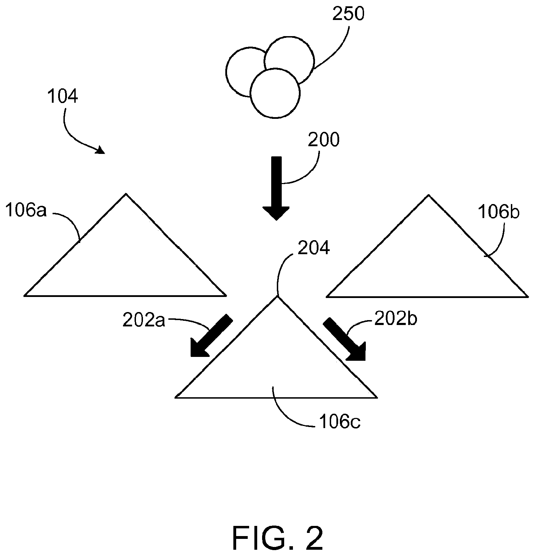

FIG. 2 is a top view of one of the cluster capture zones 104 of FIG. 1A. In general, other particle capture zones in the device 100 have the same arrangement as shown in FIG. 2, and are positioned on an uppermost surface of the substrate 102 in a repeated pattern. Thus, the particle cluster capture zone 104 contains a subset of the structures 106 in the device 100. In the present example, the particle cluster capture zone 104 includes three structures 106a, 106b, 106c, which define an input flow path 200 that is divided into two output flow paths 202a, 202b. Two of the structures (106a, 106b) in the subset are arranged in a first row (e.g., at a top of the cluster capture zone 104) whereas a third structure 106c is arranged in a second row adjacent to the first row (e.g., at a bottom of the cluster capture zone 104). To form each of the particle cluster capture zones 104, the structures 106 of the device are arranged in two or more rows (see FIG. 1A), in which the structures in each subsequent row are laterally offset from the structures in a preceding row.

The two structures 106a, 106b in the first row define a funnel region 206 that directs the input flow path 200 and particles contained within the input flow path 200 toward the output flow paths 202a, 202b. That is, the walls of the structures 106a, 106b are arranged such that a width of the input flow path 200 narrows from the top of the capture zone 104 towards the bottom structure 106c (i.e., one corner of the first triangular prism structure 106a is arranged adjacent to one corner of the second triangular prism structure 106b).

A spacing or gap between the top structures 106a and 106b is separated by a dividing barrier 204 of the bottom structure 106c to form two separate openings 206a, 206b. In general, the dividing barrier 204 is aligned substantially at the center of a gap between the top two structures 106a, 106b. Each opening leads to one of the output flow paths 202a, 202b. Thus, as the input flow path 200 travels toward the dividing barrier 204 of structure 106c, the flow path 200 is split about evenly between the two output flow paths 202a, 202b. As a particle cluster 250 travels along the input flow path 200, it will reach the dividing barrier 204 of structure 106c and become trapped due to a balance of frictional forces (e.g., arising from one or more of the structures 106a, 106b, 106c) and shear flow forces (e.g., arising from the fluid flow) at that point.

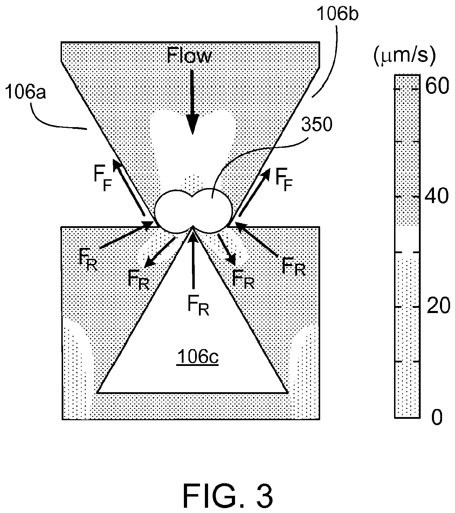

FIG. 3 is a schematic that illustrates a top view of a portion of the particle cluster capture zone on which arrows depicting the different forces that affect a particle cluster 350 are overlaid. Only half of each of the triangular prism structures 106a, 106b in the top row of the zone is shown in FIG. 3, whereas the entire triangular prism structure 106c of the bottom row is shown in FIG. 3. In addition, the regions between the triangular structures are illustrated using a heat map to depict examples of how the fluid flow rate through the particle cluster capture zone varies depending on the location. In the present example, the flow rate varies from 0 to 60 µm/sec, though other ranges for the flow rate are also possible.

When a particle cluster 350 reaches the dividing barrier of the bottom triangular prism structure 106c, the particle cluster 350 is trapped at the dividing barrier due to a dynamic balance of the forces shown in FIG. 3. These forces include: the frictional forces *F_{F}* that arise due to the particle cluster 350 contacting the sides of the triangular structures 106a, 106b in the top row; the shear forces *F_{D}* (also called drag forces) arising from the shear flow of fluid along the output flow paths; and the reaction forces *F_{R}* due to the presence of the corners/walls of the triangular prism structures. Because the dividing barrier of the bottom triangular prism structure is approximately centered in the gap between the two adjacent top triangular structures, the shear forces *F_{D}* experienced by the particle cluster 350 are balanced between the two output flow paths 202a, 202b (see FIG. 2). As a result, the particle cluster 350 is prevented from being diverted into one of the two openings. If, however, the dividing barrier were not centered in the gap, the shear flow experienced by the particle cluster 350 would be greater along one or the other of the output flow paths, causing the particle to be directed into and possibly squeeze through the corresponding opening.

In addition to the shear flow forces that balance the particle cluster 350 at the dividing barrier of the bottom triangular structure 106c, the frictional forces *F_{F}* from the funnel walls restrict the movement of the particle cluster 350. Furthermore, contact between the funnel walls and the particle cluster 350 counter-balances torque or lateral motion the cluster 350 might experience if the particle cluster has an asymmetric shape. When the particle cluster 350 meets with the dividing barrier of the bottom structure 106c, the reaction forces *F_{R}* due to one or more of the sharp edges of each of the structures in the capture zone 104 provide a countervailing force against the fluid shear forces. The reaction forces *F_{R}* can balance the shear forces when the frictional forces alone are not large enough to keep the particle cluster 350 in dynamic balance. The balance is considered "dynamic" because of the fluid actively flowing through the device.

Notably, an individual particle having a generally spherical shape will be diverted to one or the other of the output flow paths 202a, 202b upon reaching the dividing barrier of the bottom triangular prism structure 106c. This is because the particle's rounded shape prevents it from obtaining a stable equilibrium, such that it rolls off the dividing barrier. In contrast, the different forces acting on a particle cluster may cause the interfaces between particles in the cluster to align with the dividing barrier, such that the particle cluster can remain in a stable equilibrium.

An advantage of dynamically balancing the forces to trap particle clusters is that the particle clusters can be released relatively easily. In particular, if the particle clusters were captured based solely due to friction forces, the same amount of frictional forces would be needed to dislodge the particle cluster from its trapped position. However, when fluid flow is reversed (i.e., when fluid flows in the opposite direction to the input flow path), the reaction forces are absent. Thus, the aggregate force required to dislodge the trapped particle cluster is less than the aggregate force trapping the particle cluster under forward flow.

The heat map portion of FIG. 3 shows that variation in fluid flow speed through the particle cluster capture zone. As the input flow path travels down the funnel to the bottom triangular prism structure 106c, the area within which the fluid can flow narrows. As a result, the fluid flow speed increases. As shown in the example of FIG. 3, the region corresponding to maximum fluid flow speed within the particle cluster capture zone occurs in the area closest to where the corners of each of the triangular prism structures meet, i.e., where the fluid flow area is the most narrow. In contrast, the fluid flow speed decreases further away from the region where the corners meet, i.e., decreases where the fluid flow area is wider.

Though the structures 106 shown in FIGS. 1-3 have triangular prism shapes, the structures 106 may have other shapes as well, so long as the portion of the structure to be used as the dividing barrier is relatively small (e.g., a corner) compared to the particle cluster to provide a reaction force that can balance the shear forces from the input fluid flow. For instance, in the case of circulating tumor cells (CTCs), which are about 5-25 microns, the dividing barrier should have a radius of curvature of about 1-2 microns, such that a cluster of CTCs has an average size along at least one dimension that is at least 2.5 times as great as the radius of curvature of the dividing barrier. Alternatively, or in addition, the walls of the structure that meet to form the dividing barrier may be at an angle of less than or equal to 90 degrees with respect to each other. For example, in the case that an equilateral triangular prism is used as the structure, the walls that meet to form the dividing barrier would be at an angle of 60 degrees with respect to each other. In some implementations, the dividing barrier can even be a straight edge, so long as the length of the edge is short relative to the particle cluster being trapped. Accordingly, the term "dividing barrier" as used herein with respect to a structure does not necessarily mean the portion of the structure that comes to a fine point.

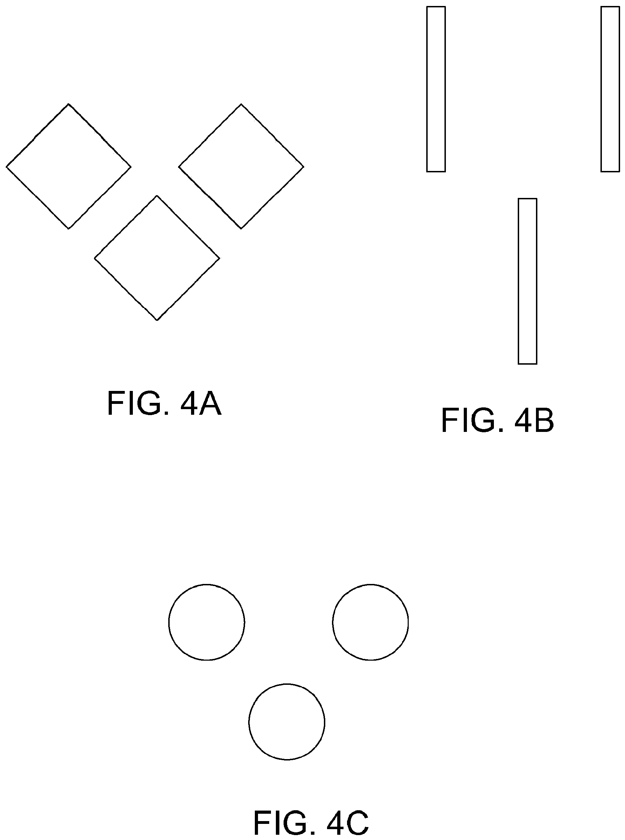

FIG. 4 is a schematic that illustrates several examples of particle cluster capture zones in which the structures have different profiles (as seen from a top view of the device, i.e., the structure also have a thickness extending into the page). The structure can be a rombohedron shape (see FIG. 4A where the profile of the structure in the top view is diamond shape), such that the corner of the rombohedron serves as the dividing barrier on which a particle cluster can be balanced by the friction, shear and reaction forces. In some implementations, the structure can be a very thin. For example, FIG. 4B shows a particle cluster capture zone composed of structures that are thin rectangular prisms. The short side of the rectangular prism structures may have an edge that is between about 1 to 2 µm. FIG. 4C is an example of a particle cluster capture zone in which the structures have a circular profile. The radius of curvature of the circles is about 1-2 microns. In the example of FIG. 4C, the dividing barrier thus corresponds to the entire structure itself. When a corner of a structure is used as the dividing barrier, the radius of curvature of the dividing barrier is preferably less than 10 microns including, for example, 5 microns, 2 microns, 1 micron, or 0.5 microns. Other radii of curvature may be used instead. In some implementations, all of the structures within each particle cluster capture zone, or all of the structures within the microfluidic device that are used in the particle cluster capture zones have the same shape. Alternatively, the structures within a particle cluster capture zone may have different shapes. For example, some particle cluster capture zones may contain structures having triangular prism shapes, whereas other particle cluster capture zones may contain structures having rombohedron shapes or thin rectangular prism shapes.

In another example, the dividing barrier that forms a particle cluster capture zone may be a first shape (e.g., a triangular prism) whereas the other two structures of the particle cluster capture zone may be a second, different shape (e.g., a rectangular prism, a rombohedron, or a cylinder). In some implementations, all of the structures within each particle cluster capture zone, or all of the structures within the microfluidic device have the same shape and size. Alternatively, the structures within a particle cluster capture zone may have the same shape (e.g., cylinder, rectangular prism, triangular prism, rombohedron, cube) but different sizes (e.g., different diameters, different volume, different cross-sectional area, different area as determined along a plane that is parallel to or perpendicular to the direction of fluid sample flow). For example, each structure in a particle cluster capture zone may be a cylinder, but the diameter of the cylinder that corresponds to the dividing barrier may be smaller than the diameters of the other two structures within the particle cluster capture zone.

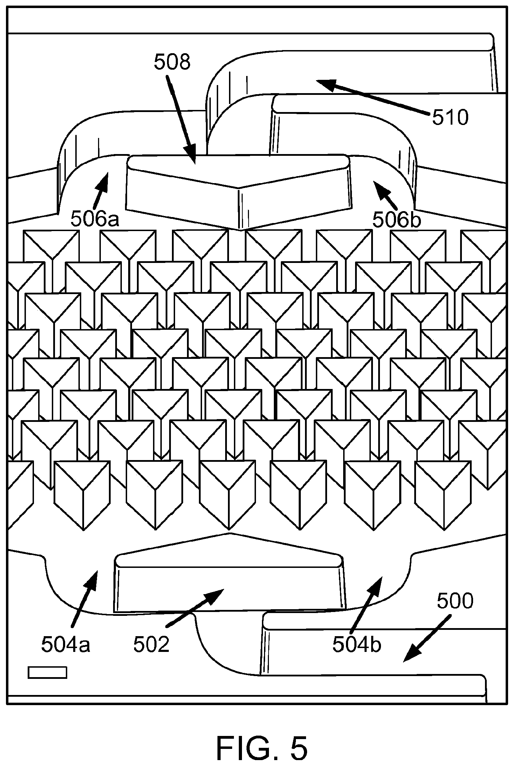

In some implementations, the microfluidic device can include additional microfluidic channels that lead into and/or from the particle cluster capture zones. FIG. 5 is a scanning electron microscope photograph of a microfluidic device that includes triangular prism structures arranged in multiple particle cluster capture zones. The scale bar in the photograph represents 100 µm. As shown in FIG. 5, the microfluidic device also includes a series of microfluidic channels fluidly coupled to the triangular structures. In particular, an inlet microfluidic channel 500 is divided by a first elongated barrier 502 into two additional microfluidic channels 504a, 504b that feed into the triangular prism structures, which form the multiple particle cluster capture zones. Likewise, two microfluidic channels 506a, 506b at an output of the particle cluster capture zones merge together to around a second elongated barrier 508 to form an outlet microfluidic channel 510.

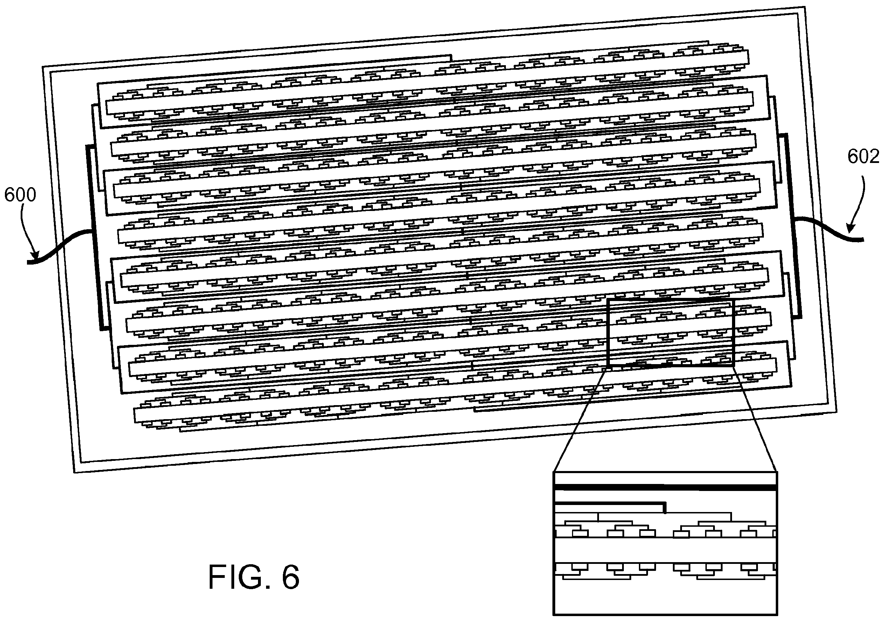

To increase fluid throughput, multiple microfluidic channels and regions containing particle cluster capture zones can be formed on the microfluidic device. For example, FIG. 6 is a photograph of an example of a microfluidic chip that is fabricated to include multiple microfluidic channels that lead to different regions on the chip having particle cluster capture zones. The fluid sample is fed into the chip using input tubing 600. The chip also includes multiple microfluidic channels fluidly coupled to the output of the particle cluster capture zones. The fluid is removed from the chip using an output tubing 602. The inset to FIG. 6 shows a close-up view of how microfluidic channels may be coupled to an area containing multiple particle cluster capture zones. Accordingly, by using a configuration such as the one shown in the example device of FIG.6, a greater amount of fluid sample may be filtered using the particle cluster capture zones.

The height/thickness of the structures in a particle cluster capture zone, such as structures 106 in FIG. 1, as measured from the uppermost surface of the substrate 102 may be in the range of about 10 µm to about 500 µm including, for example, about 50 µm, about 100 µm, about 150 µm, about 200 µm, about 250 µm, about 300 µm, about 350 µm, about 400 µm, or about 450 µm. Other heights can be used as well. The surface area of the structures 106, as measured along a plane parallel to the uppermost surface of the substrate 102 may be in the range of about 78 µm² to 0.125 mm² including, for example, about 200 µm², about 500 µm², about 1000 µm², about 5000 µm², about 0.01 mm², about 0.05 mm², or about 0.1 mm². Other areas can be used as well.

Referring to FIG. 2, the widths of the openings 206a, 206b (as measured along a plane normal to the flow paths 202a, 202b) in the particle capture zones 104 generally are about the same so as to ensure the shear forces, resulting from flow through paths 202a, 202b, are balanced on cluster particles trapped at the dividing barrier 204. The widths of the gaps may be set based on the size of the separate particles that form a particle cluster to be trapped. That is, the width may be set to be about equal to the diameter of one of the particles making up the cluster so as to inhibit clusters having two or more particles from flowing through one or more of the openings 206a, 206b. For instance, for a CTC particle cluster formed of CTC cells having an approximate diameter of about 12 µm, the width of each gap may be in the range of about 8 to 14 µm including, for example, 10 µm, 11 µm, 12 µm, or 13 µm. Other widths can be used as well for other cell diameters. In some instances, however, the location of the dividing barrier 204 may off-centered in the gap, such that the widths of the openings 206a, 206b are different from one another. In such cases, the shear flow through the smaller opening will be less than the shear flow through the wider opening, and particle clusters may not be trapped due to an imbalance in the forces applied to the cluster.

The rate at which the sample fluid is passed through the particle cluster capture zones is relatively slow compared to the rate that the washing fluid is applied in reverse to release trapped clusters. The slower flow rate is used for the fluid sample so that the shear forces on the particle clusters are not so high that the forces would push the clusters through the output flow paths of the particle cluster capture zones. For releasing the trapped particles, however, a much higher flow rate is used to wash away individual particles that may have become weakly bound to the device walls and to help release clusters that may also have become weakly bound to the device walls. For instance, the total volume flow of a fluid sample through a device containing particle cluster capture zones during a capture stage can be, e.g., in the range of about 0.1 ml/hr to about 3 ml/hr, whereas the total volume flow of a buffer solution through the device when releasing trapped clusters can be, e.g., in the range of 20 ml/hr to about 250 ml/hr. Of course, the total volume through the device can also be increased or decreased based on the overall size and/or number of flow paths of the device. The rate at which fluid flows through each of the particle cluster capture zones is determined by dividing the total fluid flow rate by the number of particle cluster capture zones in the microfluidic device. For example, assuming a particular microfluidic device includes 4000 particle cluster capture zones, and the overall flow rate through the device is 2.5 ml/hr during the cluster trapping stage, then the average flow rate through each particle cluster capture zone is about 0.625 µl/hr. The flow rate of a fluid sample through particle cluster capture zones during the trapping stage can be in the range of, for example, about 0.1 µl/hr to about 10 µl/hr including 0. 5 µl/hr, 1 µl/hr, 2 µl/hr, 4 µl/hr, 6 µl/hr or 8 µl/hr. Other flow rates for the fluid sample during the trapping stage are also possible. The flow rates of the fluid sample through the particle cluster capture zones also correspond to a shear force. For example, for each particle cluster capture zone, the shear flow of the fluid sample during the "capture" stage in each of the output flow paths may be less than about 50 s⁻¹ including, e.g., 40 s⁻¹, 30 s⁻¹, 20 s⁻¹, 10 s⁻¹, 10 s⁻¹, or 0.5 s⁻¹. Other shear flow values also may be used.

The particle clusters can include cells, such as CTCs, white blood cells, red blood cells, white blood cell and CTC aggregates, circulating epithelial cells (CECs), plasma cells, megakaryocytes, progenitor cells, nuclieoli, heme (producing) cells, or sub-sets of heme (producing) cells. In the cases of CTCs, it is believed that the cell clusters are detached from the tumor tissue. In general, the cells in CTCs are held together by chemical bonds at their interfaces, where such bonds may form during tissue generation. In some implementations, the particle clusters include beads, such as polystyrene beads or magnetic beads. The beads may be conjugated with antibodies so that they bind to analytes, such as cells, and/or to one another.

Due to the relatively slow flow of fluid in the device, gravitational forces can, in some implementations, cause particles from the fluid sample to accumulate near the interface with the substrate, causing clogging of the device. To avoid such clogging, the device can be placed on its side so that the gravitational force is in the direction of the output of the microfluidic device, instead of toward the substrate.

### Treating the Microfluidic Device to Inhibit Non-Specific Particle Binding

As explained above, microfluidic devices containing particle cluster capture zones can be used to trap and subsequently isolate particle clusters from fluid samples without requiring the particle clusters to bind to a surface of the device. In some cases, however, other undesired particles bind, either specifically or non-specifically, to regions of the microfluidic device, thus lowering the purity of the isolated particle clusters. Alternatively, or in addition, the particle clusters themselves may non-specifically bind to portions of the microfluidic device, making it more difficult to release the trapped clusters upon passing a solution in the reverse direction to the direction of the initial fluid sample flow.

There are several techniques that can be used to avoid or inhibit this non-specific binding. For example, one technique for limiting the amount of undesired binding of particles to a microfluidic device surface includes lowering the temperature of the solution and the particles contained within the solution. In the case that the particles within the fluid sample are cells, lower temperatures (relative to ambient, e.g., room temperature) lead to a reduction in cell-to-surface bond formation. Accordingly, with fewer bonds being formed, fewer cells bind to the device surface. Thus, in a microfluidic device configured to trap and isolate a specific type or types of cells, the number of undesired cells that inadvertently bind to the device surface can be reduced, thus increasing isolation purity of desired cells.

The technique of cooling can be very effective in the microfluidic device containing particle cluster capture zones. As explained herein, the particle cluster capture zones are configured to trap particle clusters mechanically, i.e., based on a balance of mechanical forces. When the device is operated at room temperature, a cluster containing cells may actively form nonspecific bonds with the walls of the device. Therefore, when a solution is passed through the device to release the trapped clusters, a relatively large number of clusters may end up stuck to the device surface. However, when the device is operated at a temperature below ambient room temperature, but above the freezing point of the fluid sample within the device, the number of particle clusters non-specifically binding to the device surface can be reduced, allowing a greater percentage of clusters to be retrieved from the device. In addition to an increase in cluster retrieval rate, the lower temperature can also reduce non-specific binding of individual cells to the device walls, enabling the purity of the retrieved clusters to be improved.

The temperature for reducing non-specific binding can be varied, but should be above the freezing point of the solution in which the particles/cells are contained and below ambient room temperature. For instance, the temperature range can be between about 0 degrees Celsius and 15 degrees Celsius including, e.g., a temperature of 2 °C, 4 °C, 6 °C, 8 °C, 10 °C, 12 °C, or 14 °C. Other temperatures can be used as well.

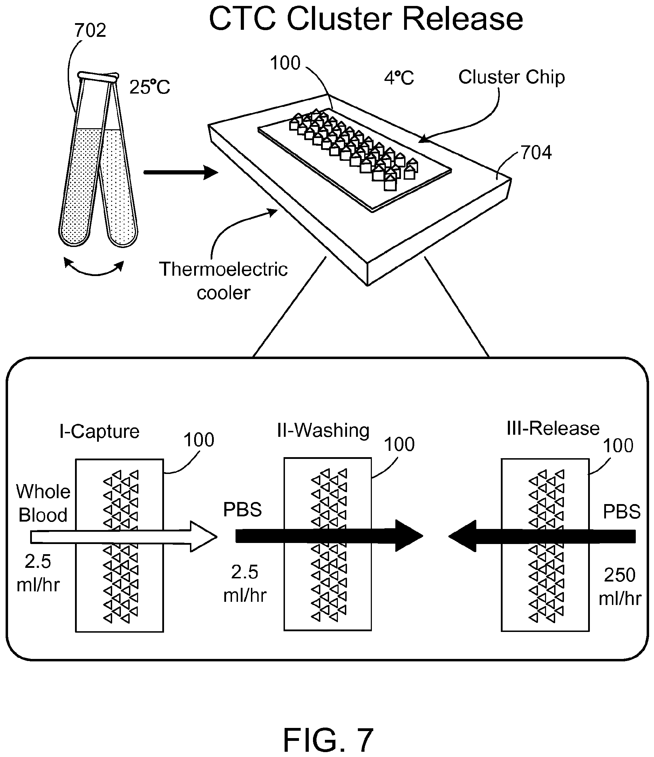

FIG. 7 is a schematic that illustrates the concept of using a microfluidic device containing particle cluster capture zones with cooling to improve cluster retrieval and purity. As shown in FIG. 7, a fluid sample 702 such as whole blood at 25 °C is introduced to the microfluidic device 100 containing particle cluster capture zones as described herein. In the present example, the microfluidic device 100 is in contact with a thermoelectric cooling unit 704, although any applicable cooling mechanism may also be used. The cooling unit 704 cools the chip down to 4 °C. Because of the device 100 is relatively thin, it is assumed that heat transfer processes cause the fluid and particles within the fluid also to cool down to the temperature of the cooling unit, i.e., about 4 °C. During operation, the fluid sample then is passed through the particle cluster capture zone in a first stage (see "I-Capture" in FIG. 7). Then, a phosphate buffer solution (PBS) is passed through the particle cluster capture zone along the same direction as the fluid sample in a second stage (see "II-Washing" in FIG. 7). Finally, a PBS is passed through the particle cluster capture zone in an opposite direction in a third stage (see "III-Release" in FIG. 7). During each stage, the device is maintained at the cooler temperature so that the binding of clusters and/or individual particles is minimized.

The technique of cooling a microfluidic device to inhibit cell binding to the device walls is not limited to the devices described herein. Instead, the cooling technique may be applied to other different microfluidic devices, where a reduction in cell binding, either non-specific or specific, is sought.

In addition, other techniques for reducing binding of cells and cell clusters can be used in addition to or as an alternative to cooling the microfluidic device. For example, in some cases, the surfaces of the device that are exposed to the fluid sample during device operation can be coated with a coating, e.g., a gel coating, that reduces cell binding. For example, gel coating techniques such as those discussed by Shah et al. in "Biopolymer System for Cell Recovery from Microfluidic Cell Capture Devices," Analytical Chemistry, Volume 84, pp. 3682-3688 (2012), incorporated herein by reference in its entirety, can be applied to surfaces of the microfluidic channels and cluster particle capture zones of the microfluidic device.

Other techniques include specific surface treatments that can be used to make the surface of the inner walls of the structures in the particle cluster capture zones resistant to cell binding. Such techniques are known to those of skill in this field.

### Microfluidic Device Fabrication

As one example, the microfluidic device described herein (e.g., microfluidic device 100) can be manufactured using the following soft lithography methods. First, a mold defining the features of the device 100 is obtained. For example, the mold can be formed by applying and sequentially patterning two layers of photoresist (e.g., SU8, Microchem, Newton, MA) on a silicon wafer using two photolithography masks according to known methods. The masks can contain features that define the different aspects of the device 100 such as the input microfluidic channels, the particle cluster capture zones, and the output microfluidic channels. The wafer with the patterned photoresist then may be used as a master mold to form the microfluidic parts. A polymer (e.g., polydimethylsiloxane (PDMS), polymethylmethacrylate (PMMA), or polycarbonate (PC)) solution then is applied to the master mold and cured (e.g., by heating). After curing, the polymer layer solidifies and can be peeled off the master mold. The solidified polymer layer includes recesses corresponding to the fluid channels and fluid pathways of the particle cluster capture zones. The polymer layer then is bonded to a substrate such as a glass slide. For example, a bottom surface of the polymer layer can be plasma treated to enhance the bonding properties of the polymer. The plasma treated polymer layer then may be placed on the glass slide and heated to induce bonding. After bonding the polymer to the glass slide, a cover slide (e.g., a glass slide) may be bonded to a top of the polymer layer to enclose the microfluidic channels and particle cluster capture zones. The surface of the polymer layer contacting the cover slide may also be plasma treated before bonding to the cover.

The example of a microfluidic device 100 described above, includes a substrate layer of glass, a polymer layer defining the microfluidic channels and the particle cluster capture zones, and a cover layer made of glass. In other implementations, the substrate layer and/or the cover layer can be polymer substrates or other similar materials.

The foregoing technique is just one example of a fabrication method for the microfluidic device. Other techniques may be used instead. For example, techniques such as hot embossing, LIGA, or injection molding may be used to fabricate one or more layers of the microfluidic device including the particle cluster capture zones.

### Microfluidics

In some implementations, the microfluidic channels and/or particle cluster capture zones of the microfluidic devices described herein are part of a larger, optional, microfluidic channel network. Such microfluidic networks can be used to facilitate control and manipulation (e.g., separation, segregation) of small volumes of liquid and help isolate target analytes from a complex parent specimen. During the isolation process, microfluidic elements provide vital functions, for example, handling of biological fluids or reproducible mixing of magnetic particles with samples. Additional information about microfluidic channel networks and their fabrication can be found, for example, in U.S. Patent App. Publication No. 2011/0091987, U.S. Patent No. 8,021,614, and 8,186,913, each of which is incorporated herein by reference in its entirety.

### Applications

There is an ever increasing need in biological research, for example, for more accurate and efficient methods to manipulate and separate target particle and cell populations. Disciplines ranging from immunology and cancer medicine to stem cell biology are highly dependent on the identification of uncontaminated populations of particular particle and cell subsets for detailed characterization. Clinically, microbiologists routinely isolate bacterial cells and white blood cell subsets for diagnostic purposes. Tumor antigen-specific regulatory T cells can be discovered in the circulating blood of cancer patients, presenting a new potential target for immunotherapy of metastatic melanoma. Environmental sensing requires surveillance of water, food and beverage processing for specific bacterial cell contamination. Vaccine developers work largely with antigen-specific T lymphocytes, rare cells which may differ from one another by no more than a single amino acid in a peptide fragment presented on the cell surface. In these different applications a common problem is presented: the need to isolate, separate and characterize subpopulations of cells present within heterogeneous, complex fluids. During the processing of these samples, the target cell population must be handled with gentle care, preventing alteration of the cell's physiological state to allow for subsequent expression profiling and molecular studies. Moreover, the cells of interest may be present at extremely low frequencies-often less than 1 cell in 10,000,000 cells, for circulating tumor cells or disease-specific T lymphocytes, increasing the complexity of the challenge.

The devices containing particle cluster capture zones described herein can be used as a means of isolating cell clusters found in fluid samples for the above-mentioned research and analysis. For example, in some implementations, a blood sample extracted from a patient may or may not contain a number of clusters of circulating tumor cells (CTCs), which can be indicative of the occurrence of cancer metastasis in the patient. A user interested in identifying the presence of the CTC clusters can use the microfluidic device to isolate CTC clusters present in the blood sample from individual cells (e.g., individual white blood cells or individual red blood cells) that are not part of a cluster. Once the cell clusters have been isolated, a user may then perform an analysis on the isolated clusters (e.g., count the number of CTC clusters present in the blood sample to diagnose the patient, to study disease progression, or to study the response of the patient to a treatment). The devices described herein are not limited to uses involving isolation of CTC clusters and can be used in a wide range of applications requiring enumerating, sorting, concentrating and ordering of particle clusters or removing undesired particle clusters from fluid samples.

The systems and methods described herein thus provide a manner in which rare cells, such as CTC clusters, can be sorted, separated, enumerated, and analyzed continuously and at high rates. Whether a particular cell cluster is a rare cell cluster can be viewed in at least two different ways. In a first manner of characterizing a cell cluster as rare, the rare cell cluster can be said to be any cell that does not naturally occur as a significant fraction of a given sample. For example, for human or manlillalian blood, a rare cell cluster may be any cell cluster other than a subject's normal blood cell (such as a non-cancerous red blood cell and a non-cancerous white blood cell). In this view, cancer or other cells present in the blood would be considered rare cells. In a second manner of characterizing a cell cluster as rare might take into account the frequency with which that cell cluster appears in a sample. For example, a rare cell cluster may be a cell cluster that appears at a frequency of approximately 1 to 50 cells per ml of blood. Alternatively, rare cell cluster frequency within a given population containing non-rare cells can include, but is not limited to, frequencies of less than about 1 cell cluster in 100 cells; 1 cell cluster in 1,000 cells; 1 cell cluster in 10,000 cells; 1 cell cluster in 100,000 cells; 1 cell cluster in 1,000,000 cells; 1 cell cluster in 10,000,000 cells; 1 cell cluster in 100,000,000 cells; or 1 cell cluster in 1,000,000,000 cells.

### EXAMPLES

The invention is further described in the following examples, which do not limit the scope of the invention described in the claims.

The experiments to obtain the data discussed in the following examples were performed as follows. First, a mold of the microfluidic channels and particle cluster capture zones was fabricated by first etching the channel and capture zone design into a silicon master using soft-lithography with SU-8 and a mask. Uncured PDMS was then poured onto the mold and cured at 65 °C for about 8 hours. The PDMS containing the outline of the channels then was bonded to a glass substrate. For each device, the PDMS was treated with O₂ plasma prior to bonding to the substrate. A cover glass was bonded to a surface of the PDMS layer. The cover layer included openings that could be fluidly coupled to inlet microfluidic channels and outlet microfluidic channels, respectively. Inlet and outlet tubes were then coupled to the openings in the cover layer.

Two types of experiments were performed: spiked cell experiments to characterize the device performance and identification of CTC clusters in patient samples. In spiked cell experiments, cancer cell lines such as LNCaP, H1650, MDA-MB-213 cell lines were used to create artificial cell clusters. These artificial clusters were stained with cell tracker fluorescent probes and were spiked into whole blood obtained from healthy donors. The spiked blood was then processed using the chip. In experiments that required the precise control of the flow rate (e.g., to determine the effect of flow rate on the CTC cluster capture rate), syringe pumps were used that could precisely control the volumetric flow rate. In other spiked cell experiments, constant pressure sources were used where the flow rate control was not critical. After the spiked blood was processed, the chip was washed with phosphate buffer solution at 2.5 ml/hr for 1 hour. Then, the imaging and counting of the cells was performed using a fluorescence microscope to characterize the chip.

In experiments for identifying CTC Clusters from patient samples, blood was collected from patients using ethylenediaminetetraacetic acid (EDTA) anti-coagulant tubes. For these experiments, constant pressure sources were used and set at 0.43 psi. This pressure gave roughly 2.5 ml/hr volumetric flow rate but changed with blood hematocrit/ viscosity. The blood sample was continuously rocked to prevent blood settling and coagulation. The blood was processed using the microfluidic chip and then washed with phosphate buffer solution at 2.5 ml/hr for 1 hour. For performing immune-staining, the cells were first fixed in 4% paraformaldehyde (PFA), and then stained for nucleus, white blood cells and CTCs using a cocktail antibody stain. Then, the fluorescence microscope was used to image stained CTC clusters. When cells were to be released from the chip, the solution flow was reversed by switching the inlet and outlet tubings. For release experiments, the device was operated on a thermoelectric cooler to increase the efficiency of CTC Cluster release process. In some of the release experiments, the cells were stained for surface tumor markers on the chip before releasing them so that the CTC clusters could be easily identified.

### Example 1 - Cluster Capture Rate

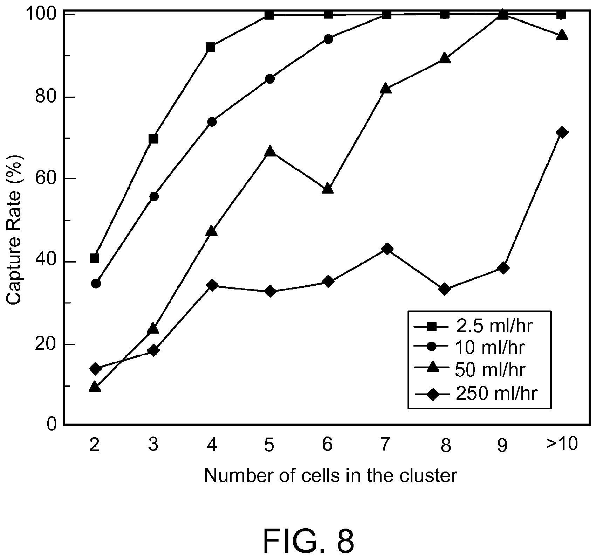

FIG. 8 is a plot that shows the rate of capture of CTC clusters from a blood sample at different overall flow rates of the blood sample through a microfluidic device containing particle cluster capture zones. As shown in FIG. 8, as the overall flow rate of the fluid sample was increased through the device, the capture efficiency of the cell clusters by the device decreased, especially for smaller sized clusters (i.e., clusters containing less cells). This is because the shear forces experienced by the cluster are much higher at the large flow rates, such that smaller clusters are "pushed" through the openings in the particle cluster capture zones instead of being balanced by the mechanical forces. As shown in the plot of FIG. 8, smaller overall flow rates are better suited for achieving high capture efficiency. In particular, flow rates as low as 2.5 ml/hr are suitable for capturing 100% of particle clusters, when such clusters have 5 or more cells.

### Example 2 - Comparison of Cluster Detection Techniques

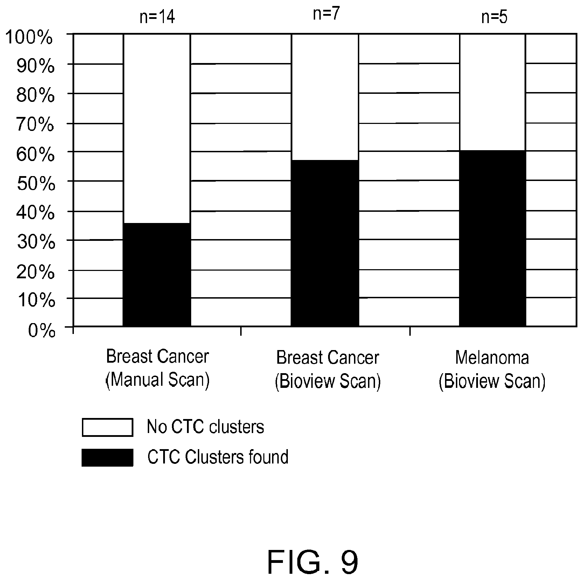

FIG. 9 is a plot illustrating a percentage of patients found to have CTC clusters in their blood using a microfluidic device containing particle cluster capture zones. Blood samples were withdrawn from patients having metastatic cancer and patients that do not have metastatic cancer. CTC clusters were identified through immuno-staining and were counted using fluorescence microscopy either manually or with an automated scanning system. As can be seen from these results, the microfluidic device described herein is useful for identifying cell clusters from a fluid sample.

### Example 3 - CTC Cluster Release

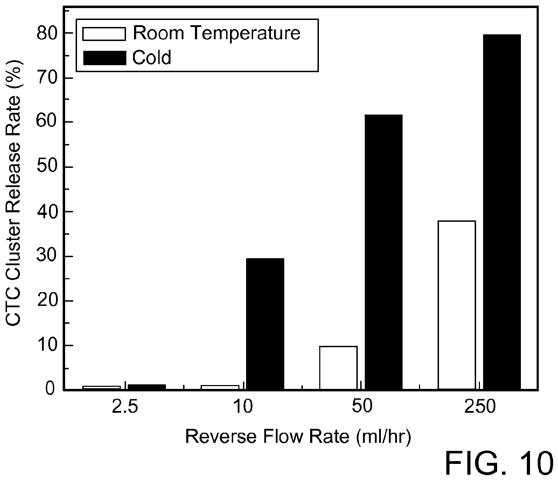

FIG. 10 is a plot showing the release rate of CTC clusters from particle cluster capture zones of a microfluidic device after the "Release" stage, during which a buffer solution was flowed through the device in the reverse direction. The experiments were performed with the microfluidic device at room temperature (between about 20 and 23 °C) and with the device cooled to 4 degree Celsius. As shown in FIG 10, only when the reverse flow rate of the buffer solution reached 250 ml/hr at room temperature did the release rate of trapped clusters reach close to 40%. On the other hand, there was a significant increase in the release rate when the device is chilled, showing up to 80% release rate when the buffer solution was flowed through the device at 250 ml/hr. Thus, the chilling of the device can be a useful technique to reduce cell binding.

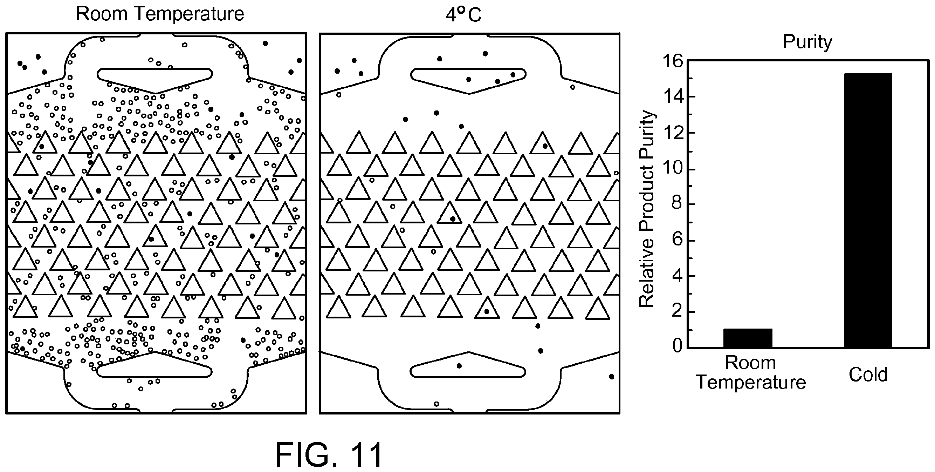

FIG 11 is a schematic showing the particle cluster capture zones after the release stage when the buffer solution was flowed through the device at room temperature and when the buffer solution was flowed through the device at 4 degrees Celsius. As shown in schematic corresponding to the room temperature process, a large number of CTC clusters remained stuck due to non-specific binding to surfaces of the microfluidic device. In contrast, the schematic corresponding to the chilled process shows very few cell clusters that remained bound to the device. The plot to the right of the micrographs shows the relative product purity obtained from operating the device at room temperature and at 4 degrees Celsius. As can be seen from the plot, cooling the device to 4 degrees Celsius can significantly improve the purity of the captured cell clusters.

### Example 4 - Cell Viability

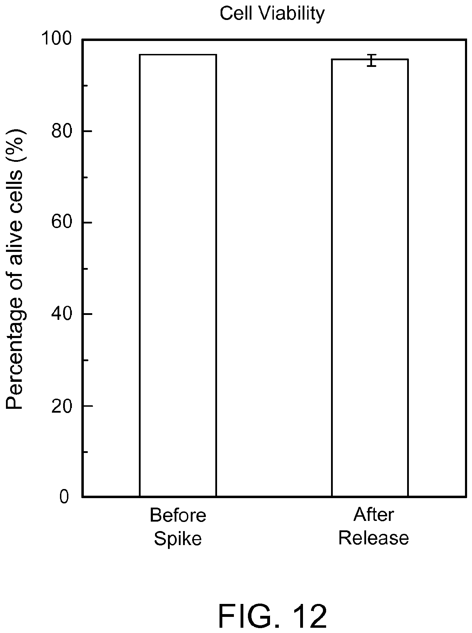

FIG 12 is a plot that shows cell viability for cells processed with the microfluidic device having the particle cluster capture zones ("After release") and for cells that were not processed in the microfluidic device ("Before spike"). Cell viability was determined using LIVE/DEAD® cell viability Assays from Life Technologies. As can be seen from this plot, just as many cells were viable after passing through the device as the number of viable cells for those that were not introduced into the device.

### OTHER EMBODIMENTS

It is to be understood that while the invention has been described in conjunction with the detailed description thereof, the foregoing description is intended to illustrate and not limit the scope of the invention, which is defined by the scope of the appended claims. Other aspects, advantages, and modifications are within the scope of the following claims.

## Claims

1. A microfluidic device comprising:
a substrate defining an inlet and an outlet;
a set of structures arranged on the substrate between the inlet and the outlet to form a plurality of particle cluster capture zones,
wherein each particle cluster capture zone comprises a subset of the structures that is arranged to define an input flow path that is divided into two output flow paths by a dividing barrier of one of the structures in the particle cluster capture zone, and
wherein the subset of structures is further arranged such that each output flow path has a cross-section large enough to allow passage of a single particle of a first type and prohibit passage of a cluster of two or more of the particles of the first type; and
a plurality of microfluidic channels defined on the substrate to direct fluid from the inlet to the input flow paths of the particle cluster capture zones and from the output flow paths of the particle cluster capture zones to the outlet.

2. The microfluidic device of claim 1, wherein the structures are arranged in two or more rows, wherein the structures in each row are laterally offset from the structures in an adjacent row to form the plurality of particle cluster capture zones.

3. The microfluidic device of claim 2, wherein a subset of structures includes three triangular prism structures arranged in two rows, wherein first and second triangular prism structures are arranged in a first row with one corner of the first triangular prism structure being arranged adjacent to one corner of the second triangular prism structure to define the input flow path between them, and a third triangular prism structure is arranged in a second row offset from the first and second triangular prism structures in the first row, such that a sharp edge of the third triangular prism structure is arranged between adjacent corners of the first and second triangular prism structures located in the first row, wherein the dividing barrier is the sharp edge of the third triangular prism structure.

4. The microfluidic device of claim 3, wherein the particles of the first type are cells and the sharp edge of the third triangular prism structure is approximately centered between the adjacent corners of the first and second triangular prism structures and a distance between each of the adjacent corners of the first and second triangular prism structures and the sharp edge of the third triangular prism structure is at least 10 microns.

5. The microfluidic device of claim 1, wherein the dividing barrier has a corner radius less than about 10 microns.

6. The microfluidic device of claim 1, wherein walls of the structure that forms the dividing barrier meet at an angle less than or equal to 90 degrees.

7. The microfluidic device of claim 1, wherein all of the structures have a cross-sectional shape that is the same.

8. The microfluidic device of claim 1, wherein the structures in the set of structures comprise two or more different cross-sectional shapes.

9. The microfluidic device of claim 1, wherein one or more of the structures have a cross-sectional shape selected from the group consisting of a triangle, a diamond, or a circle.

10. The microfluidic device of claim 1, wherein each structure has a height of at least 10 microns.

11. The microfluidic device of claim 1, further comprising a cooling device coupled to the substrate, wherein the cooling device is configured to cool the microfluidic device to a temperature between about 0 and 15 degrees Celsius.

12. The microfluidic device of claim 1, wherein the particles in the particle clusters comprise cells or beads bound to cells.

13. A method of isolating particle clusters from a fluid sample using a microfluidic device, the method comprising:
flowing, along a first direction, the fluid sample through a plurality of particle cluster capture zones in a microfluidic device, wherein each particle cluster capture zone comprises a plurality of structures arranged to define an input flow path that is divided into two output flow paths by a dividing barrier of one of the structures in the particle cluster capture zone;
allowing a particle cluster from the fluid sample to be trapped at the dividing barrier in one of the particle cluster capture zones; and
flowing, along a second direction that is opposite to the first direction, a second fluid through the plurality of particle cluster capture zones to release the trapped particle cluster.

14. The method of claim 13, wherein the particle clusters comprise cell clusters.

15. The method of claim 14, wherein the cell clusters are circulating tumor cell (CTC) clusters.

16. The method of claim 13, wherein the fluid sample further comprises individual particles, and the individual particles pass through the plurality of particle cluster capture zones during flowing of the fluid sample without being trapped by the dividing barriers of the particle capture zones.

17. The method of claim 16, wherein the individual particles comprise red blood cells and/or white blood cells.

18. The method of claim 13, wherein, for each particle cluster capture zone, the two outgoing fluid streams are separated by an angle of less than or equal to 90 degrees.

19. The method of claim 13, further comprising cooling the microfluidic device to a temperature between a freezing temperature of the fluid sample and about 15 degrees Celsius.

20. The method of claim 13, wherein the overall flow rate of the fluid sample through the plurality of particle cluster capture zones is less than about 250 ml/hr.

21. The method of claim 13, wherein, for each particle cluster capture zone, the flow rate the fluid sample through the particle cluster capture zone is less than about 10 microliter/hr.

22. The method of claim 13, wherein, for each particle cluster capture zone, the shear flow of the fluid sample through each of the outgoing fluid streams is less than about 50 s⁻¹.

23. The method of claim 13, wherein the particle cluster comprises a cluster of two or more particles of a first type, and wherein the subset of structures is further arranged such that each output flow path has a cross-section large enough to allow passage of a single particle of a first type and prohibit passage of the particle cluster.
